# EUROPÄISCHE PATENTSCHRIFT

(11) **EP 2 145 546 B1**
(45) Veröffentlichungstag und Bekanntmachung des Hinweises auf die Patenterteilung: **25.01.2012**
(21) Anmeldenummer: 09162354.6
(22) Anmeldetag: 10.06.2009
(51) Int. Cl.: A23G 9/38, A23G 9/52

(54) **Trockenmischung und Konzentrat sowie Verfahren zur Herstellung von Speiseeis**
Dry mixture and concentrate and method for producing ice cream
Mélange sec et concentré ainsi que procédé de fabrication de crème glacée

(30) Priorität: 11.07.2008 DE 202008009325 U; 18.02.2009 DE 202009002297 U
(43) Veröffentlichungstag der Anmeldung: 20.01.2010
(73) Patentinhaber: Pfeifer & Langen Kommanditgesellschaft, 50933 Köln (DE)
(72) Erfinder: Ludovici, Karl, 51465, Bergisch Gladbach (DE); Bongers, Ulrich, 50169, Kerpen (DE)
(74) Vertreter: Lippert, Stachow & Partner

(56) Entgegenhaltungen:
- DE-U1-202009 002 297
- FR-A- 2 885 013
- GB-A- 658 854
- US-A- 3 183 098
- US-A- 3 475 181
- DATABASE GNPD [Online] MINTEL Juni 2008 ANONYMOUS: 'No Sugar Added Ice Cream' Retrieved from www.gnpd.com Database accession no. 925568

## Beschreibung

Die Erfindung betrifft eine Trockenmischung zur Herstellung von Speiseeis, die mit Früchten, Fruchtzubereitungen und/oder einem Milchprodukt homogenisiert und anschließend zur Herstellung des Speiseeises gefroren wird. Weiterhin betrifft die Erfindung ein Verfahren zur Herstellung von Speiseeis.

Derartige Trockenmischungen sind insbesondere zur Verwendung im Haushalt durch den Endverbraucher bestimmt. Bei haushaltsüblichen Rezepturen muss unter Verwendung einer Trockenmischung, bei welcher das Speiseeis ohne Verwendung einer Eismaschine hergestellt wird, zumeist in einem separaten Schritt ein Lebensmittelschaum hergestellt werden, der vor dem Einfrieren vorsichtig mit den übrigen Bestandteilen zu vermischen ist. Bei Herstellung eines Parfaits oder eines Cremeeises handelt es sich bei dem Lebensmittelschaum in aller Regel um Schlagsahne und/oder mit Zucker aufgeschlagenem Eis, bei einem Sorbet um Eischnee. Die separate Herstellung eines Lebensmittelschaums ist jedoch sehr aufwendig. Weiterhin weisen die derart hergestellten Produkte eine deutlich weniger leichte Struktur und geringere Cremigkeit auf, als maschinell hergestelltes Eis, bei welchem Luft in die zu gefrierende Masse eingeschlagen wird, um einen feinen Schaum zu bilden, oder wobei vor und/oder während des Gefriervorganges lebensmitteltaugliche Industriegase wie Stickstoff in das zu gefrierende Produkt eingepresst werden, um ein cremiges Speiseeis zu bilden. Durch das Einschlagen von Luft oder das Einpressen lebensmitteltauglicher Gase und die mechanische Bearbeitung wird neben der Bildung eines feinen Schaums zugleich eine Bildung von größeren Eiskristallen verhindert, so dass ein Cremeeis erhalten wird. Zu unterscheiden hiervon sind herkömmliche Arten von "Wassereis", in welchem in hohem Ausmaß Eiskristalle enthalten sind, welche bei Verkostung des Eises ohne weiteres wahrgenommen werden, so dass derartige Eissorten meist wenig bevorzugt sind. Die Verwendung eines Lebensmittelschaums hat weiterhin den Nachteil, dass dieser zumeist mehr oder weniger kalorienhaltig ist. Durch die herkömmliche Arten von "Wassereis", in welchem in hohem Ausmaß Eiskristalle enthalten sind, welche bei Verkostung des Eises ohne weiteres wahrgenommen werden, so dass derartige Eissorten meist wenig bevorzugt sind. Die Verwendung eines Lebensmittelschaums hat weiterhin den Nachteil, dass dieser zumeist mehr oder weniger kalorienhaltig ist. Durch die Verwendung einer Eismaschine kannzwar auch im Haushalt unter Verwendung herkömmllcher Trockenmischungen ein halbwegs cremiges Eis hergestellt werden, dieses ist bei Verwendung allgemein üblicher Haushaltsgeräte wie eines Handmixers, handbetätigten Püreestabes oder einer Küchenmaschine jedoch nicht herstellbar. Dieses gilt insbesondere dann, wenn ein Fruchteis herzustellen ist. Eine Eismaschine ist jedoch teuer und nicht immer greif bar.

Die GB 658 854 beschreibt ein Eiscremepulver zur Herstellung von Speiseeis enthaltend Natriumhydrogencarbonat und eine Säure wie Weinsäure oder Zitronensäure, welche getrennt voneinander angeordnet sind.

Die FR 2 885 013 beschreibt eine Trockenmischung zur Herstellung von Speiseeis, welche Pflanzenfette enthält.

Die US 3,183,098 beschreibt eine Trockenmischung zur Herstellung gefrorener Desserts in einer Öl-in-Wasser-Emulsion, wobei die Mischung ungefähr 20 bis 26% Fett enthält, sowie ein chemisches Frelsetzungssystem enthaltend Carbonate/Hydrogencarbonate sowie saure Phosphate.

Die US 3,475,181 beschreibt eine trockene Zusammensetzung enthaltend Vollmilchpulver, Pflanzenöl und Glucono-Delta-Lacton, welches sich in Wasser langsam ersetzt.

Der Erfindung liegt daher die Aufgabe zugrunde, eine Trockenmischung zur Herstellung von Speiseeis bereit zu stellen, mittels derer im Haushalt mit einfachen Küchengeräten wie Handmixer und Pürierstab, d.h. ohne Verwendung einer Eismaschine, und ohne Verwendung eines separat hergestellten Lebensmittelschaums ein cremiges Eis, vorzugsweise Fruchteis, mit wenig Aufwand herstellbar ist. Weiter hin ist es Aufgabe, ein Konzentrat einer derartigen Trockenmischung und ein Verfahren zur Herstellung von Speiseeis herzustellen.

Diese Aufgabe kann überraschenderweise erfindungsgemäß durch eine Trockenmischung nach Anspruch 1 gelöst werden, welche mindestens eine Zuckerart und/oder einen Zuckeraustauschstoff, mindestens ein Aufschlagmittelwie in Anspruch 1 angegeben, wobei das Aufschlagmittel gegebenenfalls mindestens ein Verdickungsmittel enthält, wobei der Fettgehalt derTrockenmischung ≤ 10 Gew.-% ist. Ferner wird die Aufgabe durch ein Konzentrat der Trockenmischung gelöst, welches einen gegenüber derTrockenmischung reduzierten Gehalt an mindestens einem Zucker enthält, nämlich einen Gehalt an Saccharose von ≤ 50 Gew.-%, oder frei von Zucker und/oder Zuckeraustauschstoffen ist und einen Gehalt an Aufschlagmittel von 0,5-75 Gew.-% und einen Fettgehalt von ≤ 10 Gew.-% aufweist. Durch die Verwendung eines Aufschlagmittels, vorzugsweise in Kombination mit einem Verdickungsmittel, kann in Gegenwart mindestens eines Zuckers und/oder Zuckeraustauschstoffes und in Gegenwart von Früchten und/oder einer Fruchtzubereitung überraschenderweise ein sehr cremiges und leichtes Fruchteis mit haushaltsüblichen Küchengeräten wiez.B. Stabmixer, Küchenmaschine, Sahneschläger oder dergleichen praktisch in einem "Eintopfverfahren" hergestellt werden, ohne dass die Verwendung einer Eismaschine oder die separate Herstellung oder Zugabe eines Lebensmittelschaums notwendig ist. Die Homogenisierung der Bestandteile und das Aufschlagen können vorzugsweise gleichzeitig oder unmittelbar aufeinanderfolgend in demselben Behältnis, vorzugsweise durch dieselbe Gerätschaft erfolgen, wozu. z.B. das Küchengerät wie ein Handmixer mit praktisch gleicher oder gegebenenfalls mit erhöhter Drehzahl betrieben werden kann. Das durch die erfindungsgemäße Trockenmischung hergestellte Speiseeis weist auch dann praktisch keine Eiskristalle auf, die beim Verzehr noch sensorisch wahrnehmbar sind, auch wenn dieses ohne Verwendung einer Eismaschine hergestellt wurde. Das Speiseeis kann ferner auf einfache Weise im Haushalt hergestellt werden. Das mittels der erfindungsgemäßen Trockenmischung hergestellte Speiseeis kann insbesondedergleichen praktisch in einem "Eintopfverfahren" hergestellt werden, ohne dass die Verwendung einer Eismaschine oder die separate Herstellung oder Zugabe eines Lebensmittelschaums notwendig ist. Die Homogenisierung der Bestandteile und das Aufschlagen können vorzugsweise gleichzeitig oder unmittelbar aufeinanderfolgend in demselben Behältnis, vorzugsweise durch dieselbe Gerätschaft erfolgen, wozu z.B. das Küchengerät wie ein Handmixer mit praktisch gleicher oder gegebenenfalls mit erhöhter Drehzahl betrieben werden kann. Das durch die erfindungsgemäße Trockenmischung hergestellte Speiseeis weist auch dann praktisch keine Eiskristalle auf, die beim Verzehr noch sensorisch wahrnehmbar sind, auch wenn dieses ohne Verwendung einer Eismaschine hergestellt wurde. Das Speiseeis kann ferner auf einfache Weise im Haushalt hergestellt werden. Das mittels der erfindungsgemäßen Trockenmischung hergestellte Speiseeis kann insbesondere ein Fruchteis sein. Die Früchte und/oder Fruchtzubereitung des Eises können gegebenenfalls teilweise oder vollständig durch ein oder mehrere Milchprodukte ersetzt sein.

Zur Herstellung des Speiseeises kann die Trockenmischung nach Anspruch 1 zu frischen Früchten, Fruchtpüree, Fruchtsaft und/oder anderen Fruchtzubereitungen (gegebenenfalls auch aufgetautes Gut gefrorener Früchte, auch wenn die Konsistenz desselben unterschiedlich zu der von frischen Früchten ist) gegeben und mit haushaltsüblichen Küchengeräten wie z.B. Stabmixer (Pürierstab), Sahneschläger, Handmixer o.dgl. homogenisiert und vorzugsweise gleichzeitig, d.h. in einem Arbeitsgang, aufgeschlagen werden. Vorzugsweise werden Früchte (gegebenenfalls zerkleinert) und/oder Fruchtpüree eingesetzt. Auch bei frischen Früchten oder zumindest einem Anteil an frischen Früchten an der Gesamtfruchtmasse ist es somit nur erforderlich, diese mit der Trockenmischung zusammen zu homogenisieren und aufzuschlagen. Der dabei entstehende Fruchtschaum kann unmittelbar anschließend bei üblicher Gefriertemperatur, beispielsweise bei -12 bis -30° Celsius oder bei -18 bis -25° Celsius eingefroren werden und ist danach sofort verzehrfertig. Während des Gefriervorganges ist somit ein Aufschlagen oder Rühren nicht mehr erforderlich. Überraschenderweise kann somit ohne Eismaschine ein cremiges Speiseeis mit Fruchtanteil hergestellt werden. Als "Frucht" sei hierbei wie üblich die Blüte einer Pflanze im Zustand der Samenreife verstanden, d. h. die Gesamtheit der Organe, die aus einer Blüte hervorgehen, und die die Samen bis zu deren Reife umschließen, oder zumindest im Wesentlichen auch nur das Fruchtfleisch. Die eingesetzte Fruchtzubereitung weist vorzugsweise einen Anteil an Fruchtfleisch auf, der ≥ 30-40 Gew.-% oder ≥ 50-60 Gew.-%, insbesondere ≥ 70-80 Gew.-% oder ≥ 90-95 Gew.-% des Fruchtfleischgehaltes der frischen Früchte beträgt.

Anstelle oder zusätzlich zu Früchten/Fruchtzubereitung können auch Gemüse, insbesondere frisches Gemüse, und/oder Gemüsezubereitungen eingesetzt werden, beispielsweise von Gurke, Kürbiss, Rhabarber, Melone, Tomate oder anderem Fruchtgemüse, auch von Brokkoli, Möhren, Erbsen und dergleichen.

Die Früchte und/oder die Fruchtzubereitungen können teilweise oder gegebenenfalls vollständig durch Milchprodukte wie beispielsweise Milch, Sahne, Joghurt, Molke oder dergleichen ersetzt werden, wobei gegebenenfalls das Aufschlagmittel entsprechend anzupassen ist, so dass dieses beispielsweise auch in Gegenwart von Lipiden aktiv ist. Die Milchprodukte können ggf. zusammen mit den Früchten und/oder der Fruchtzubereitung zumindest teilweise oder vollständig vorhomogenisiert werden, bevor die Trockenmischung zugefügt und anschließend die gesamte Mischung homogenisiert und unter Bildung eines Schaums aufgeschlagen wird, wobei sämtliche Verfahrensschritte in einer "Eintopfreaktion" nacheinander in ein und demselben Gefäß durchgeführt werden können. Insbesondere können auch sämtliche drei Stoffe, d.h. (1) Frucht und/oder Fruchtzubereitung, (2) Milchprodukt und (3) Trockenmischung unmittelbar zusammen miteinander vermischt, homogenisiert und aufgeschlagen werden. Es versteht sich, dass letztendlich unter Verwendung der erfindungsgemäßen Trockenmischung alle Stoffe in beliebiger Reihenfolge miteinander vermischt, gegebenenfalls nach Zugabe einer weiteren Komponente vorhomogenisiert, und nach Zufügung sämtlicher Stoffe homogenisiert und vorzugsweise zugleich oder auch anschließend in einem separaten Verfahrensschritt aufgeschlagen werden können, um anschließend unter Herstellung des Speiseeises gefroren zu werden.

Gegebenenfalls können alternativ oder zusätzlich auch andere Geschmacksträger wie Getränke, Limonaden, Cola oder dergleichen eingesetzt werden. Vorzugsweise werden zu der Zubereitung aus Trockenmischung und Früchten, gegebenenfalls auch in zerkleinerter oder pürierter Form, aber ohne Flüssigkeitszusatz und ohne Fruchtsäfte, weniger als 150-125 Gew.-% oder weniger als 75-100 Gew.-%, vorzugsweise weniger als 30-50 Gew.-%, besonders bevorzugt weniger als 10-20 Gew.-%, oder 0-5 Gew.-% an Flüssigkeit zugegeben, einschließlich Wasser, Fruchtsäfte, Milch, Sahne, Geschmacksträger wie Limonade, Kaffee oder dergleichen.

Gegebenenfalls können ≥ 10-20 Gew.-%, ≥ 30-50 Gew.-%, ≥ 60-75 Gew.-% oder auch ≥ 80-90 Gew.-% oder gegebenenfalls auch ca. 100 Gew.-% der Früchte und/oder Fruchtzubereitung durch eines oder mehrere Milchprodukte ersetzt werden. Andererseits kann bezogen auf den Gesamtgewichtsanteil von Früchten (gegebenenfalls einschließlich Fruchtzubereitung) und Milchprodukten der Gewichtsanteil der Milchprodukte ≤ 90-95 Gew.-%, ≤ 80-65 Gew.-% vorzugsweise ≤ 40-50 Gew.-%, besonders bevorzugt ≤ 20-30 Gew.-% oder ≤ 5-10 Gew.-% betragen. Ein niedrigerer Milchproduktegehalt ist bevorzugt, um ein cremiges Fruchteis herzustellen und beeinflusst auch das Aufschlagverhalten und Aufschlagvolumen der noch nicht gefrorenen Speiseeiszubereitung unter den gegebenen Verfahrensbedingungen.

Als Zucker können in der Trockenmischung insbesondere ein oder mehrere der Stoffe Saccharose, Fructose, Dextrose, Glukose bzw. Glukosesirup (getrocknet), Maltodextrin (getrocknet), Lactose, Maltose eingesetzt werden, einschließlich Oligo- und/oder Polysaccharide wie Dextrine, gegebenenfalls auch Zucker auf Basis von Honig oder Sirupen. Insbesondere können Saccharose und/oder Dextrose und/oder Fruktose enthalten sein. Allgemein kann Saccharose in Kombination mit mindestens einem weiteren Zucker und/oder Zuckeraustauschstoff enthalten sein, insbesondere mit Dextrose und/oder Fruktose. Saccharose und/oder Dextrose und/oder Fruktose, insbesondere Saccharose, können jeweils einzeln oder zusammen (in Kombination von zwei oder drei dieser Zucker, wobei jeweils Saccharose enthalten sein kann) den größten Gewichtsanteil des Zuckers (ggf. einschließlich Zuckeraustauschstoffe) der Trockenmischung darstellen, d.h. ≥ 20- 30 Ges.-%, ≥ 40- 50 Gew.-%, vorzugsweise ≥ 60-70 Gew.-%, ≥ 80-90 Gew.-% oder zumindest in etwa 100 Gew.-% derselben. Saccharose kann in Bezug auf den Zuckergehalt der Trockenmischung ≥ 20-35 Gew.-%, ≥ 40-50 Gew.-%, vorzugsweise ≥ 60-70 Gew.-% oder ≥ 80-90 Gew.-% oder auch ≥ 95 Gew.-% ausmachen. Saccharose einerseits und Dextrose und/oder Fruktose andererseits können in einem Gewichtsverhältnis von 20:1 bis 1:1, 10:1 bis 2:1 oder 6:1 bis 3:1, insbesondere ca. 4:1 eingesetzt werden, was jeweils auch für das Gewichtsverhältnis von Saccharose zu Dextrose oder das Gewichtsverhältnis von Saccharose zu Fruktose gelten kann. Allgemein kann der Saccharosegehalt (Gew.-%) größer als der Gehalt an Dextrose und/oder Fruktose sein. Allgemein kann die Trockenmischung ≤ 60 Gew.-% oder ≤ 40-50 Gew.-%, vorzugsweise ≤ 35-30 Gew.-% oder ≤ 25 Gew.-% andere Zucker als Saccharose enthalten, insbesondere Dextrose und/oder Fruktose. Der Gehalt an von Saccharose verschiedenen Zuckern und/oder Zuckeraustauschstoffen in der Trockenmischung, insbesondere von Dextrose und/oder Fruktose, kann ≥ 1-3 Gew.-% oder ≥ 5-7,5 Gew.-% betragen, vorzugsweise ≥ 10-12,5 Gew.-% oder ≥ 15 Gew.-%, was sich auf die Cremigkeit des Speiseeises vorteilhaft auswirkt. Dies gilt insbesondere in Kombination mit (vorzugsweise zumindest teilweise) hydrolisierten pflanzlichen und/oder tierischen Proteinen als Aufschlagmittel, wie unter beschrieben. Bezogen auf die hier genannten Gewichtsverhältnisse und Gesamtgehalte an Dextrose und Fruktose können jeweils 100% Dextrose oder 100% Fruktose oder Mischungen derselben, z.B. im Verhältnis 50:50, vorliegen.

Die Cremigkeit der mittels der erfindungsgemäßen Trockenmischung hergestellten Speiseeiszubereitung wird auch durch das Aufschäumverhalten und Aufschäumvolumen der zum Gefrieren hergerichteten Zubereitung (d.h. einschließlich Früchten, Fruchtzubereitungen, ggf. Milchprodukten) und den geringen oder fehlenden Gehalt an Eiskristallen einer bestimmten Größe, wie unten näher definiert, wesentlich mitbestimmt. Das Aufschäumverhalten kann hierbei gemessen werden als Volumenverhältnis der Zubereitung vor und nach dem Aufschlagen unter jeweils gleichen Bedingungen.

Gegebenenfalls kann zumindest ein Teil des Zuckers der Trockenmischung auch durch einen oder mehrere Zuckeraustauschstoffe ersetzt sein. Als Zuckeraustauschstoffe können beispielsweise eine oder mehrere der Komponeten ausgewählt aus der Gruppe Sorbit, Mannit, Xylith, Maltit, Isomalt, Erythit, Polydextrose, Lactiol, Sucralose, Aspartam, Acesulfam, Neotam, Cyclamat, Saccharin, Stevia, Taumin eingesetzt werden. Es können aber auch ≥ 10-15 Gew.-%, ≥ 20-30 Gew.-% oder ≥ 35-40 Gew.-% oder gegebenenfalls auch ≥ 60-80 Gew.-% oder zumindest in etwa 100 Gew.-% des Zuckers (einschließlich Zuckeraustauschstoffe) nicht Saccharose und/oder Fructose sein bzw. Zuckeraustauschstoffe sein. Es können auch bis zu 10-15 Gew.-%, bis zu 20-30 Gew.-% oder bis zu 35-40 Gew.-% oder gegebenenfalls auch bis zu 60-80 Gew.-% oder mehr des Gesamtanteils von Zucker und Zuckeraustauschstoffen nicht Saccharose und/oder Fructose sein bzw. Zuckeraustauschstoffe sein. Allgemein, insbesondere dann, wenn ein größerer Teil des Zuckers durch Zuckeraustauschstoffe ersetzt wird, können Quell- oder Volumenmittel wie beispielsweise Faserstoffe und/oder Faserhydrolysate, insbesondere Hydrolysate von Kohlehydraten und/oder Polysacchariden, beispielsweise Inulin, Guargum, Alginate, Dextran, Gummi Arabicum einzeln oder in Kombination eingesetzt werden, die gegebenenfalls auch als Verdickungsmittel einsetzbar sind. Als Faserstoffe können Kohlehydrate, insbesondere Oligosaccharide wie Raffinose, Stachyose, Verbascose, Ajugose, Kestose und/oder Melezitose, beispielsweise mit bis zu 6-10 Zuckermolekülen, eingesetzt werden.

Der Gesamtzuckergehalt (einschl. Zuckeraustauschstoffe) der Trockenmischung kann ≥40-60 Gew.-%, vorzugsweise ≥ 70 Gew.-% oder ≥ 75-80 Gew.-% betragen, beisieplsweise ≥ 85-90 Gew.-% oder ≥ 92-93 Gew.-%, der Gesamtzuckergehalt kann auch ≤ 98 Gew.-%, ≤ 95-96 Gew.-% oder ≤ 92-93 Gew.-% betragen. Der Gesamtzuckergehalt (einschl. Zuckeraustauschstoffe) der Trockenmischung kann 20-98 Gew.-%, vorzugsweise 50-95 Gew.-% oder 75-92 Gew.-% betragen. Die Trockenmischung kann dann unmittelbar mit den Früchten und/oder Fruchtzubereitung zur Herstellung eines Speiseeises eingesetzt werden. mischung erhalten wird, mittels derer nach dem erfindungsgemäßen Verfahren ein verzehrfertiges Speiseeis herstellbar ist. Vorzugsweise ist somit das Konzentrat nur um genau eine Zuckerart und/oder weitere Anteile mindestens einer Zuckerart (einschl. Zuckeraustauschstoff) zu ergänzen, um eine einer Trockenmischung entsprechende Gesamtzusammensetzung zu erhalten.

Das Konzentrat kann mit dem ergänzenden Zucker bzw. Zuckeraustauschstoff (vorzugsweise Saccharose und/oder Fructose und/oder Dextrose) und mit den Früchten und/oder der Frucht zubereitung, welche ggf. teilweise oder vollständig durch eines oder mehrere Milchprodukte ersetzt werden können, homogenisiert und vorzugsweise gleichzeitig oder auch anschließend auch aufgeschlagen werden, so dass der derart erhaltene Fruchtschaum (oder Milchproduktschaum) vorzugsweise unmittelbar eingefroren werden kann, um das verzehrfertiges Speiseeis zu ergeben. Zur Herstellung der Speiseeiszubereitung kann das Konzentrat somit mit dem zugefügten Zucker vermengt werden, entweder unmittelbar oder zusammen mit anderen Komponenten wie z.B. den Früchten, Fruchtzubereitung und/oder den Milchprodukten, oder die Zugabe von Konzentrat und zugefügtem Zucker zu den anderen Komponenten erfolgt getrennt. Gegebenenfalls kann das Konzentrat alternativ oder zusätzlich zu Saccharose und/oder Fructose auch um Dextrose (Traubenzucker), Glukosesirup, Ahornsirup (getrocknet) und/oder Maltodextrin (getrocknet) ergänzt werden, beispielsweise auch nur um Fruktose und/oder Dextrose.

Vorzugsweise enthält das Konzentrat bereits eine oder mehrere Zuckerarten ausgewählt aus der Gruppe Fructose, Dextrose, Glukosesirup, Maltodrextrin (und gegebenenfalls auch einen gewissen, nochzu ergänzenden Anteil an Saccharose), insbesondere Fruktose und/oder Dextrose. Alternativ oder zusätzlich kann das Konzentrat bereits einen oder mehrereZuckeraustauschstoffe, vorzugsweise ausgewählt aus der Gruppe Sorbit, Manlt, Xylith, Maltit, Isomalt, Erythit, Polydextrose, enthalten kann. Der zu ergänzende Zucker und/oder Zuckeraustauschstoff kann teilweise schon in dem Konzentrat enthalten sein oder vollständig ergänzt werden. Gegebenenfalls ist das Konzentrat um den gesamten oder nur einen Teil der Saccharose und/oder Fruktose und/oder Dextrose, die letztendlich In derTrockenmischung enthalten sein soll, zu ergänzen.

Das Aufschlagmittel ist in der Trockenmischung in einem Anteil von 0,1-25 Gew.-% oder 1-10 Gew.-% enthalten beispielsweise ≥ 0,25-0,5 Gew.-% oder ≥ 0,75-1 Gew.-%, der Gehalt an Aufschlagmittel in der Trockenmischung kann ≤ 7,5-10 Gew.-% betragen oder ≤ 4-5 Gew.-%, bevorzugt liegt er im Bereich von 1-5 Gew.-% oder 1,5-3,5 Gew.-%. Vorzugsweise ist das Aufschlagmittel in dem Konzentrat mit einem Anteil von 0,5-60 Gew.-% oder gegebenenfalls auch bis 75 Gew.-%, vorzugsweise 5-50 Gew.-% oder 10-40 Gew.-%, besonders bevorzugt 15-35 Gew.-% oder 20-30 Gew.-% enthalten.

Das Aufschlagmittel enthält einen oder mehrere Stoffe ausgewählt aus der Gruppe Pflanzenproteine (hydrolysierte oder nicht-hydrolysierte), hydrolysierte oder nicht-hydrolysierte tierische Proteine, Milchproteine (hydrolysierte oder nicht-hydrolisierte); einschließlich Molkeproteine, Gelatine (insbesondere, falls nicht bereits als Verdickungsmittel enthalten), Trockeneiweiß (bevorzugt nicht hydrolysiert), Aufschlagemulgatoren (beispielsweise Ester von Mono- und/oder Diglyceriden), insbesondere Ester von Speisefettsäuren, modifizierte Stärke, insbesondere chemisch, physikalisch und/oder enzymatisch modifizierte Stärke, vorzugsweise in Form von emulgierender (modifizierter) Stärke, Cellulosederivate (insbesondere, falls nicht bereits als Verdickungsmittel enthalten), Quaillja (insbesondere Quaillja saponaria), Lecithin (einschließlich hydrolysiertes Lecithin). Das Aufschlagmittel kann ferner auch Zuckerester z.B. Succroseester von Fettsäuren, enthalten (insbesondere auch in Kombination mit den genannten pflanzlichen oder tierischen Proteinen), Allgemein können die als Aufschlagmittel eingesetzten Proteine nicht hydrolysiert sein, vorzugsweise.sind sie teilweise hydrolysiert. Die oben genannten Stoffe können einzeln oder in Kombination ≥ 30-40 Gew.-%, ≥ 50-60 Gew.-%, vorzugsweise ≥ 70-80 Gew.-% oder ≥ 90-95 Gew.-% oder praktisch 100 Gew.-% des Aufschlagmittels darstellen, diese Gehaltsangaben können insbesondere auch gelten für die pflanzlichen- und/oder tierischen Proteine (einschließlich Milchproteine), insbesondere jeweils für hydrolysierte pflanzlichen- und/oder tierischen Proteine (einschlieBlich Milchproteine), besonders bevorzugt für hydrolysierte Pflanzenproteine, insbesondere hydrolysierte Hülsenfrüchte- oder Erbsenproteine, Kartoffel- und/oder Reisproteine. Von den pflanzlichen und/oder tierischen Proteinen (einschließlich Milchproteinen) können jeweils 10-90 Gew.-%, beispielsweise 20-80 Gew.-% oder 30-70 Gew.-%, vorzugsweise 40-60% hydrolysiert sein, gegebenenfalls auch ≥ 40-50%, ≥ 60-70% oder ≥ 80-90%, ohne hierauf beschränkt zu sein.

Bevorzugt als Aufschlagmittel sind pflanzliche und/oder tierische Proteine. Besonders bevorzugt sind hydrolysierte Pflanzenproteine und/oder hydrolysierte tierische Proteine, die einzeln oder in Kombination miteinander einsetzbar sind. Als tierische Proteine sind auch Milchproteine einsetzbar. Insbesondere bei Verwendung von pflanzlichen und/oder tierischen Proteinen, vorzugsweise in Form von teilweise hydrolysierten Proteinen, insbesondere hydrolysierten Pflanzenproteinen, kann auch ohne Eismaschine in Gegenwart von frischen Früchten oder keine derartige Anteile. Der Anteil an freien Amonisäuren und/oder unhydroysiertem Protein kann jeweils unabhängig voneinander ≤ 10-15 Gew.-% oder ≤ 3-5 Gew.-% oder ≤ 1-2 Gew.-% betragen.

Die Auswahl jeweils eines hydrolysierten pflanzlichen und/oder tierischen Proteins, einschließlich Milchprotein, insbesondere hydrolysierter Proteine von Hülsenfrüchten wie z.B. Erbsenprotein, und/oder von Kartoffeln und/oder Reis, insbesondere in Kombination mit einem besonderen Verhältnis des Verdickungsmittels zum Aufschlagmittel, und besonders bevorzugt unter Berücksichtigung des Gehaltes und der Auswahl der Zucker/Zuckeraustauschstoffe, ist für die erfindungsgemäße einfache Herstellung eines cremigen Eises in einer "Eintopfreaktion" von besonderer Bedeutung, wobei zugleich das Speise ein gutes Mundgefühl und gute sensorische Eigenschaften hat.

Das Aufschlagmittel (gegebenenfalls entsprechend auch das Verdickungsmittel) kann jeweils auch Bestandteil eines anderen Produktes, vorzugsweise eines natürlichen Produktes, insbesondere Vollproduktes sein, welches in getrockneter Form vorliegen kann, z. B. als Milchpulver, Eipulver (einschließlich Eiweißpulver) und/oder Molkepulver.

Das Verdickungsmittel kann in einem Anteil von 0,1-25 Gew.-%, oder 0,25-20 Gew.-% vorzugsweise 0,5-15 Gew.-% oder 1-10 Gew.-%, beispielsweise 2-5 Gew.-%, besonderes bevorzugt 1,5-3 Gew.-% in der Trockenmischung enthalten sein. Der Gehalt des Verdickungsmittels in der Trockenmischung kann auch ≥ 0,75-1 Gew.-%, ≥ 1,25 Gew.-% oder ≥ 1,5-1,6 Gew.-% oder ≤7,5 Gew.-% oder ≤ 3,5-4 Gew.-% betragen.

Als Verdickungsmittel können ein oder mehrere der Stoffe ausgewählt aus der Gruppe modifizierter Stärken (insbesondere chemisch und/oder physikalisch und/oder enzymatisch modifiziert), insbesondere in Form veresterter Stärke, wie z. B. Carragen, Gelatine (insbesondere, sofern nicht bereits als Aufschlagmittel enthalten), Guarkernmehl, Johannisbrotkernmehl, Cellulosen und deren Derivate, Hemicellulosen (insbesondere, sofern nicht bereits als Aufschlagmittel enthalten) enthalten sein. Besonders bevorzugt enthält das Verdickungsmittel einen oder mehrere Stoffe aus der Gruppe Carragen, Guarkernmehl, Alginate (und deren Derivate), Xanthan, Agaragar, Furcellan, Chitosan, Chitin, Glucomannan, natürliche quellfähige Stoffe wie beispielsweise Karayagum, GellanGum, Kartoffel-, Reis-, Tapioca-, Getreideprodukte (gegebenenfalls auch als Vollprodukte), Stärken, einschließlich modifizierte Stärken (insbesondere zuckermodifizierte Stärken wie succinierte Stärke (z. B. Stärkenatriumoctenylsuccinat) und/oder physikalisch modifizierte Stärken) oder Pektine, einschließlich Kombinationen derselben. Insbesondere bevorzugt sind quellfähige Stärken (einschließlich modifizierte Stärken), ganz besonders bevorzugt sind Pektine, gegebenenfalls in Kombination mit quellfähigen Stärken. Quellfähige Stärken (Quellstärken) sind insbesondere verkleisterte, gelatinierte Stärken, wobei in den erfindungsgemäßen Zusammensetzungen vorzugsweise kalt lösliche Stärken eingesetzt werden. Die eingesetzten Quellstärken können ein Wasserbindungsvermögen von ≥ 2 g Wasser je g Stärke, vorzugsweise ≥ 4-6g Wasser/g Stärke oder vorzugsweise 8-16 g Wasser / g Stärke aufweisen. Dies Quellvermögen kann allgemein für die eingesetzten quellbaren Verdickungsmittel gelten. Die Quellstärken können durch Enzyme, Säuren, Salze oder Alkalien oder auf andere geeignete Weise weiter modifiziert sein. Diese hier genannten Stoffe können jeweils in Kombination mit einem oder mehreren der oben genannten anderen Verdickungsmittel enthalten sein.

Unter Umständen kann ein Stoff bzw. Stoffe einer Stoffklasse sowohl als Aufschlag- als auch Verdickungsmittel fungieren, beispielsweise modifizierte Stärke (z. B. succinierte Stärke), wobei dann vorzugsweise zumindest ein weiterer Stoff als zumindest ein weiteres Aufschlag- und/oder Verdickungsmittel vorgesehen ist, um das jeweils andere Mittel bereitzustellen. So können z.B. verschiedene modifizierte Stärken vorliegen, von denen eine im Wesentlichen als Aufschlagmittel fungiert, eine andere im Wesentlichen als Verdickungsmittel. Entsprechendes kann für andere Stoffe wie Gelatine, Cellulosederivate oder dergleichen gelten. Die eingesetzte Stärke kann in wässriger Lösung einen pH-Wert von 4-5 ergeben. Allgemein können auch (Teil-) Hydrolysate von Kartoffeln, Reis, Getreiden als Verdickungsmittel, Aufschlagmittel, Süßungsmittel und/oder Säuerungsmittel eingesetzt werden. Vorzuweise unterscheiden sich die Stoffe einer Stoffgruppe jedoch voneinander, so dass eines der Mittel der Stoffklasse überwiegend oder im Wesentlichen als Aufschlagmittel und das andere überwiegend oder im Wesentlichen als Verdickungsmittel wirkt.

Das Gewichtsverhältnis von Verdickungsmitteln zu Aufschlagmitteln in der Trockenmischung kann 10:1 bis 1:10 oder vorzugsweise 5:1 bis 1:5, 4:1 bis 1:4, 3:1 bis 1:3, besonders bevorzugt 2:1 bis 1:2,5, beispielsweise 1,5:1 bis 1:2,5 oder ca. 1:1,5 bis 1:1 betragen, wobei die Grenzen unabhängig von einander gelten können. Das Gewichtsverhältnis von Verdickungszu Aufschlagmittel kann ≤ 3:1 oder ≤ 2,5:1 oder ≤ 2:1 sein. Das Gewichtsverhältnis von Verdickungsmitteln zu Aufschlagmitteln hat auch einen Einfluss auf die Cremigkeit der fertigen Speiseeiszubereitung. Insbesondere auch auf das Aufschlagvolumen bei Anwesenheit von Früchten/Fruchtzubereitungen unter Berücsichtigung der Stabilität des Fruchtschaunmes.

Das Gewichtsverhältnis des Gesamtzuckers (einschl. Zuckeraustauschstoffe) der Trockenmischung zu dem Verdickungsmittel kann 150:1 bis 1:1 oder 100:1 bis 1:1, vorzugsweise 75:1 bis 10:1 oder 50:1 bis 5:1, beispielsweise 60:1 bis 20:1 oder 60:1 bis 30:1, vorzugsweise ca. 45:1 betragen, gegebenenfalls auch nur 30:1 bis 10:1 oder ca. 25:1, wobei die Grenzen gegebenenfalls unabhängig voneinander gelten können.

Das Gewichtsverhältnis des Gesamtzuckers (einschl. Zuckeraustauschstoffe) der Trockenmischung zu dem Aufschlagmittel kann im Bereich von 100:1 bis 10:1 oder bis 1:1 betragen. Es kann auch 60:1 bis 15:1 betragen oder 50:1 bis 5:1, vorzugsweise im Bereich von 40:1 bis 20:1 oder 35:1 bis 25:1, beispielsweise ca. 30:1, wobei die Grenzen gegebenenfalls unabhängig voneinander gelten können.

Weiterhin kann die Trockenmischung Säuerungsmittel, insbesondere Genußsäuren enthalten. Die Genußsäuren können in einem Anteil von 0,1 oder 0,5 bis 20 Gew.-% oder von 0,75-15 Gew.-% enthalten sein, beispielsweise im Bereich von 0,2 bis 10 Gew.-%, vorzugsweise 0,3-7,5 Gew.-% oder 0,5-5 Gew.-%, besonders bevorzugt 0,75-3 Gew.-% oder 1,1-2 Gew.-% in der Trockenmischung enthalten sein. Als Säuerungsmittel können beispielsweise Dextrin oder andere, gegebenenfalls modifizierte, Oligo- oder Polysaccharide eingesetzt werden. Als Genußsäuren können insbesondere Carbonsäuren, einschließlich Hydroxycarbonsäuren, eingesetzt werden, beispielsweise eine oder mehrere der Säuren ausgewählt aus der Gruppe Zitronensäure, Äpfelsäure, Milchsäure , Weinsäure oder Ascorbinsäure, Adipinsäure, Succinsäure, gegebenenfalls alternativ oder zusätzlich auch Glucono-delta-lacton und /oder Phosphorsäure, ohne hierauf beschränkt zu sein. Das Säuerungsmittel bzw. die Genusssäuren können nicht nur den Geschmack sondern auch die Verarbeitung der Trockenmischung zum Speiseeis beeinflussen.

Die Trockenmischung kann einen niedrigen Fettgehalt aufweisen oder praktisch fettfrei sein, insbesondere wenn diese jeweils zur Herstellung von Fruchteis dienen, wobei ≤ 50 Gew.-% oder ≤ 20-30 Gew.-% oder ≤ 5-10 Gew.-% der Früchte und/oder Fruchtzubereitung durch eines oder mehrerer Milchprodukte ersetzt sein können. Der Fettgehalt der Trockenmischung kann hierbei ≤ 5-10 Gew.-%, ≤ 2 bis 3 Gew.-% oder ≤ 0,5-1 Gew.-% oder ≤ 0,1-0,25 Gew.-% betragen.

Vorzugsweise werden mittels der erfindungemäßen Trockenmischung Fruchteis (Fruchtanteil mindestens 20 Gew.-%, bei Zitrusfrüchten mind. 10 Gew.-%) hergestellt. Gegebenenfalls ist auch die Herstellung von Fruchtsorbet (Fruchtanteil mind. 25 Gew.-%, bei Zitrusfrüchten mind 15 Gew.-%, ohne Verwendung von Milch oder Milchbestandteilen) möglich, gegebenenfalls auch von Eiscreme (mind. 10 Gew.-% Milchfett), Einfacheiscreme oder Eis mit Pflanzenfett (mind 3 Gew.-% Milchfett oder Pflanzenfett) möglich, gegebenenfalls jeweils unter Zugabe Fruchtschaunmes.

Das Gewichtsverhältnis des Gesamtzuckers (einschl. Zuckeraustauschstoffe) der Trockenmischung zu dem Verdickungsmittel kann 150:1 bis 1:1 oder 100:1 bis 1:1 oder im Bereich von 100:1 bis 5:1, vorzugsweise 75:1 bis 10:1 oder 50:1 bis.5:1, beispielsweise 60:1 bis 20:1 oder 60:1 bis 30:1, vorzugsweise ca. 45:1 betragen, gegebenenfalls auch nur 30:1 bis 10:1 oder ca. 25:1, wobei die Grenzen gegebenenfalls unabhängig voneinander gelten können.

Das Gewichtsverhältnis des Gesamtzuckers (einschl. Zuckeraustauschstoffe) der Trockenmischung zu dem Aufschlagmittel kann im Bereich von 100:1 bis 10:1 oder bis 1:1 betragen, oder im Bereich von 100:1 bis 5:1. Es kann auch 60:1 bis 15:1 betragen oder 50:1 bis 5:1, vorzugsweise im Bereich von 40:1 bis. 20:1 oder 35:1 bis 25:1, beispielsweise ca. 30:1, wobei die Grenzen gegebenenfalls unabhängig voneinander gelten können.

Weiterhin können dieTrockenmischung bzw. das erfindungsgemäße Konzentrat Säuerungsmittel, insbesondere Genußsäuren enthalten. Die Genußsäuren können in einem Anteil von 0,1 oder 0,5 bis 20 Gew.-% oder von 0,7.5-15 Gew.-% enthalten sein, beispielsweise im Bereich von 0,2 bis 10 Gew.-%, vorzugsweise 0,3-7,5 Gew.-% oder 0,5-5 Gew.-%, besonders bevorzugt 0,75-3 Gew,-% oder 1,1-2 Gew.-% in der Trockenmischung enthalten sein. In dem Konzentrat können die Säuerungsmittel bzw. Genußsäuren in einem Anteil von 0,5 -50 Ges.-%, vorzugsweise 5-40 Gew.-% oder 7,5-30 Ges.-% oder 15-30 Gew:-%, besonders bevorzugt 11-20 Gew.-%, enthalten sein, wobei die hier genannten Grenzen unabhangig voneinander gelten können. Als Säuerungsmittel können beispielsweise Dextrin oder andere, gegebenenfalls modifizierte, Oligo- oder Polysaccharide eingesetzt werden. Als Genußsäuren können insbesondere Carbonsäuren, einschließlich Hydroxycarbonsäuren, eingesetztwerden, beispielsweise eine oder mehrere der Säuren ausgewählt aus der Gruppe Zitronensäure, Äpfelsäure, Milchsäure , Weinsäure oder Ascorbinsäure, Adipirtsäure, Succinsäure, gegebenenfalls alternativ oder zusätzlich auch Glucono-delta-lacton und /oder Phosphorsäure, ohne hierauf beschränkt zu sein. Das Säuerungsmittel bzw. die Genusssäuren können nicht nur den Geschmack sondern auch die Verarbeitung der Trockenmischung zum Speiseeis beeinflussen.

Die Trockenmischung oder das Konzentrat können einen niedrigen Fettgehalt aufweisen oder praktisch fettfrei sein, insbesondere wenn diese jeweils zur Herstellung von Fruchteis dienen, wobei ≤ 50 Gew.-% oder 20-30 Gew.-% oder ≤ 5-10 Gew.-% der Früchte und/oder Fruchtzubereitung durch eines oder mehrerer Milchprodukte ersetzt sein können. Der Fettgehalt der Trockenmischung beträgt hierbei ≤ 5-10 Gew.-%, ≤ 2 bis 3 Gew.-% oder ≤ 0,5-1 Gew.-% oder ≤ 0,1-0,25 Gew.-% betragen. Der Fettgehalt des Konzentrats beträgt ≤ 10 Gew.-%, ≤ 5-7 Gew.-% oder ≤ 2-3 Gew.-% oder auch ≤ 0,5-1 Gew.-%:
Vorzugsweise werden mittels der erfindungemäBen Trockenmischung oder des Konzentrats Fruchteis (Fruchtanteil mindestens 20 Gew.-%, bel Zitrusfrüchten mind. 10 Gew.-%) hergestellt. Gegebenenfalls ist auch die Herstellung von Fruchtsorbet (Fruchtanteil mind. 25 Gew.-%, bei Zitrusfrüchten mind 15 Gew.-%, ohne Verwendung von Milch oder Milchbestandteilen) möglich, gegebenenfalls auch von Eiscreme (mind. 10 Gew.-% Milchfett), Einfacheiscreme oder Eis mit Pflanzenfett (mind 3 Gew.-% Milchfett oder Pflanzenfett) möglich, gegebenenfalls jeweils unter Zugabe von Milchprodukten. Allgemein umfasst der Begriff "Speiseeiszubereltung" im Sinne der Erfindung somit auch Sorbets und andere geeiste Speisezubereitungen, vorzugsweise Speiseeis im engeren Sinne.

Insbesondere dann, wenn ein Teil der Früchte und/oder der Fruchtzubereitung durch Milchprodukte ersetzt werden soll, so können die Trockenmischung und/oder das Konzentrat bereits einen gewissen oder einen entsprechenden Anteil an Trockenmilchprodukten aufweisen, beispielsweise Trockenmilch, Trockenbuttermilch o.dgl., so dass Milchprodukte wie Milch oder auch Joghurt, Sahne und/oder Molke zur Herstellung des Speiseeises nicht mehr oder nur noch in vermindertem Ausmass zugesetzt werden müssen. Das jeweilige Milchprodukt kann beispielsweise sprüh- oder gefriergetrocknet sein.

Es versteht sich, dass vor, während oder nach dem Homogenisieren und Aufschlagen je nach Geschmack der zu gefrierenden Masse auch einer oder mehrere weitere Bestandteile bleispielsweise aus der Gruppe Schokolade, Trockenfrüchte, Nüsse, Mandeln, Karamellpulver, Krokant, Aromastoffe, Aromen, Farbstoffe und lösliche und lösliche Faserstoffe oder andere Stoffe zur Geschmacksveränderung in geeigneter Form zugegeben werden können oder dass die Trockenmischung oder das Konzentrat bereits derartige Bestandteile enthält. Diese Bestandteile können beispielsweise in einem Gesamtanteil von ≤ 40-50 Gew:-%, ≤ 25-30 Gew.-%, ≤ 10-20 Gew.-% oder ≤ 3-5 Gew.-% oder ≤ 0,5-1 Gew.-% bezogen auf die Trockenmischung zugefügt werden oder in der Trockenmischung oder dem Konzentrat enthalten sein. Die genannten Bestandteile können gegebenenfalls in einem Anteil von ≥ 0,5-2 Gew.-%, ≥ 5-10 Gew.-%, ≥ 15-20 Gew.-% oder ≥ 30-40 Gew.-% in derTrockenmischung oder dem Konzentrat enthalten sein.

Die Trockenmischung und/oder das Konzentrat und/oder das aus dieser hergestellte Speiseeis können ≤ 20 Gew.-%, ≤ 5-10 Gew.-% oder ≤ 2-3 Gew.-% oder ≤ 1 Gew.-% tierische Bestandteile aufweisen, z. B. tierische Fette und/oder Eiweiße, oder praktisch vollständig frei von tierischen Bestandteilen sein, ausgenommen gegebenenfalls Gelatine, Die Trockenmischung haltsüblicher Küchengeräte vorzugsweise ausgenommen einer Eismaschine erfolgen kann, gegebenenfalls kann hierzu jedoch auch bei Bedarf eine Eismaschine, insbesondere eine haushaltsübliche Eismaschine, eingesetzt werden. Hierzu können die Früchte, eine Fruchtzubereitung und/oder ein Milchprodukt zu der Trockenmischung zugegeben werden. Das Aufschlagen kann auch anschließend, insbesondere unmittelbar anschließend, zu dem Homogenisieren erfolgen, vorzugsweise in demselben Gefäß. Das Aufschlagen kann auch gleichzeitig oder in demselben Gefäß unmittelbar anschließend zu dem Homogenisieren erfolgen. Der nach dem Aufschlagen erhaltene Fruchtschaum kann dann anschließend, vorzugsweise unmittelbar anschließend, gefroren werden, beispielsweise bei einer Gefriertemperatur von - 12° bis -30°C, vorzugsweise -15 bis -28°C oder -18° bis -25°C. Das derart hergestellte Speiseeis ist cremig und kann mit einem Eisportionierer zu Bällchen geformt werden. Gegebenenfalls kann ein Teil der Früchte und/oder Fruchtzubereitung durch eines oder mehrere Milchprodukte ersetzt werden, wobei die Milchprodukte mit der Trockenmischung oder dem Konzentrat homogenisiert werden können, gegebenenfalls in Gegenwart der Früchte/Fruchtzubereitung. Gegebenenfalls können Früchte und/oder Fruchtzubereitung auch vollständig durch Milchprodukte ersetzt werden. Die Herstellung des Speiseeises durch die erfindungsgemäße Trockenmischung ist insbesondere dadurch möglich, dass durch die verwendeten Aufschlagmittel, insbesondere in Form der gegebenenfalls hydrolysierten Pflanzen- und/oder tierischen Proteine, der aufgeschlagene Schaum (Fruchtschaum) so ausreichend stabilisiert und zugleich die Viskosität des Schaumes geeignet eingestellt wird, so dass überraschenderweise auch bei hohem Fruchtanteil ein cremiges Eis ohne Eismaschine oder zusätzlichen Lebensmittelschaum bzw. Druckgas herstellbar ist. Die verwendeten Aufschlagmittel führen hierbei zur Bildung eines feinen Schaumes, der bestimmend für die leichte Konsistenz des fertigen Produktes ist. Auf die Verwendung bereits gefrorerer Früchte kann gegebenenfalls vollständig verzichtet werden. Weiterhin weist die Speiseeiszubereitung keine oder praktisch keine Eiskristalle, insbesondere keine sensorisch störenden groben Eiskristalle auf, beispielsweise zumindest praktisch keine Eiskristalle mit einer Größe von ≥200-150 µm, vorzugsweise ≥ 125-100 µm, besonders bevorzugt ≥ 85 µm oder ≥ 50-75 µm, wodurch insbesondere auch in Kombination mit dem erzielten Aufschlagvolumen und der Festigkeit der gefrorenen Zubereitung das Eis besonders cremig ist. Dies kann gelten bei einem Gefriervorgang im Bereich von -12°C bis -30°C oder -18°C bis -25°C bei einer Gefrierdauer von 1 bis 2 Wochen oder von 1 bis 2 Monaten.

Die Zubereitung des zu gefrierenden Schaumes bzw. Fruchtschaumes kann ohne eine zwischenzeitliche Erwärmung oder Erhitzung erfolgen, also vorzugsweise bei einer Zubereitungstemperatur von ≤ 30°C oder von Raumtemperatur (20-25°C), gegebenenfalls auch bei leichter Kühlung wie bei Temperaturen von ≥ 15-17°C (dies ist hier unabhängig von einer gegebenenfalls separaten Erwärmung oder Erhitzung bei der Herstellung der Fruchtzubereitung, die hiervon ausgenommen ist).

Das eingesetzte Gewichtsverhältnis von Früchten und/oder Fruchtzubereitung zu der Trockenmischung des Speiseeises kann im Bereich von 8:1 bis 1:3 oder 6:1 bis 1:2 liegen, vorzugsweise im Bereich von 4:1 bis 1:1,5 oder bis 1:2, besonderes bevorzugt im Bereich von 3:1 bis 1:1 oder im Bereich von 2,5:1 bis 1,5:1 betragen, z.B. ca. 2:1. Entsprechendes kann gelten für das Gewichtsverhältnis von Trockenmischung zu dem Gesamtgewicht an Früchten, Fruchtzubereitung und Milchprodukten, wenn Früchte/Fruchtzubereitung zumindest teilweise durch Milchprodukte ersetzt werden.

Das derart hergestellte Speiseeis kann einen Fettgehalt ≤ 5-10 Gew.-%, ≤ 2-3 Gew.-% oder vorzugsweise ≤ 0,5 bis 1 Gew.-% oder ≤ 0,1 bis 0,25 Gew.-% aufweisen.

Weiterhin betrifft die Erfindung ein Verfahren zur Herstellung einer Speiseeiszubereitung, bei welcher die Trockenmischung zusammen mit den Früchten und/oder der Fruchtzubereitung, die jeweils teilweise oder vollständig durch eine oder mehrere Milchprodukte ersetzt sein können, mittels eines haushaltsüblichen Küchengerätes (vorzugsweise ausgenommen einer Eismaschine) homogenisiert und vorzugsweise gleichzeitig aufgeschlagen werden und wobei der dabei entstehende Fruchtschaum vorzugsweise ohne Zusatz eines separat hergestellten Lebensmittelschaums, z.B. eines Eischaums, Schlagsahne o. dgl., vorzugsweise bei Temperaturen von -12 bis -30°C, vorzugsweise -15 bis -28°C oder -18 bis -25°C, gefroren wird. Vorzugsweise wird der nach dem Homogenisieren und Aufschlagen entstandene Fruchtschaum unmittelbar gefroren. Nach dem Gefriervorgang ist das Speiseeis verzehrfertig.

Die Erfindung wird nachfolgend an einem Ausführungsbeispiel beschrieben und erläutert.

### Ausführungsbeispiel 1

Zusammensetzung einer Trockenmischung:
75 g Zucker (Saccharose)
20 g Dextrose
2,5-3 g Aufschlagmittel (Protein, z. B. hydrolysiertes Erbsenprotein)
2 g Verdickungsmittel (Pektin)
1,2 g Genusssäure (z.B. Zitronensäure)

Zu 250 g der oben genannten Trockenmischung werden 500 g vorzugsweise frische Früchte (beispielsweise frische Erdbeeren) zugegeben, diese werden zusammen mit der Trockenmischung für ein bis drei Minuten mit einem haushaltsüblichen Mixstab intensiv homogenisiert und gleichzeitig geschäumt. Der derart erhaltene Schaum wird bei -18° bis -25° C tiefgefroren. Hierdurch wird unmittelbar ein zum Verzehr geeignetes cremiges Fruchteis erhalten.

In einer Abwandlung können zu 250 g der obigen Trockenmischung 350 g frische Früchte wie z.B. Erdbeeren und 100 g Milch zugegeben und wie oben beschrieben verfahren werden.

### Ausführungsbeispiel 2

Zusammensetzung einer Trockenmischung:
75 g Zucker (Saccharose)
20 g getrockneter Glukosesirup
2,5-3 g Protein (z. B. hydrolysiertes Erbsenprotein) als Aufschlagmittel
3,75 g Quellstärke (z.B. Kartoffelquellstärke) als Verdickungsmittel
1,8 g Genusssäure (z.B. Zitronensäure)

Zu 250 g der oben genannten Trockenmischung werden 500 g vorzugsweise frische Früchte (beispielsweise frische Erdbeeren) zugegeben, diese werden zusammen mit der Trockenmischung für ein bis zwei Minuten mit einem haushaltsüblichen Mixstab intensiv homogenisiert und gleichzeitig geschäumt. Der derart erhaltene Schaum wird bei -18° bis -25° C tiefgefroren. Hierdurch wird unmittelbar ein zum Verzehr geeignetes cremiges Fruchteis erhalten.

Hinsichtlich Cremigkeit und einfacher und schneller Herstellung ist die Trockenmischung nach Ausführungsbeispiel 1 jedoch besonders bevorzugt.

Das nach den Ausführungsbeispielen hergestellte Speiseeis ist cremig und feinkristallin. Das Speiseeis ist jeweils auf einfache Art und Weise mittels eines haushaltsüblichen Eisportionierers portionierbar.

## Patentansprüche

1. Trockenmischung zur Herstellung von Speiseeis, welche mit Früchten, Fruchtzubereizungen und/oder einem Milchprodukt homogenisiert und unter Gefrieren das Speiseeis ergibt, **dadurch gekennzeichnet, dass** die Trockenmischung enthält:
(1) mindestens eine Zuckerart und/oder einen Zuckeraustauschstoff,
(2) mindestens ein Aufschlagmittel, welches mindestens eines oder mehrere Mittel enthält ausgewählt aus der Gruppe hydrolysierte oder nichthydrolysierte Pflanzenproteine, hydrolysierte oder nicht-hydrolysierte tierische Proteine, hydrolysierte oder nicht-hydrolysierte Milchproteine, hydrolysierte oder nicht hydrolysierte Molkeproteine, Gelatine, hydrolysiertes oder nichts hydrotisiertes Trockeneiweiß, Aufschlagemulgatoren, Cellulosederivate, Lecithin, modifizierte Stärke, Quaillja,
wobei das Aufschlagmittel in einem Anteil von 0,1 bis 25 Gew.-% in der-Trockenmischung enthalten ist.
(3) gegebenenfalls mindestens ein Verdickungsmittel und/oder
(4) gegebenenfalls mindestens ein Säuerungsmittel, einschließlich eine Genußsäure,
wobei der Fettgehalt der Trockenmischung ≤ 10 Gew.-% ist.

2. Trockenmischung nach Anspruch 1, **dadurch gekennzeichnet, dass** als Aufschlagmittel hydrolysierte Pflanzenproteine und/oder hydrolysierte tierische Proteine enthalten sind oder dass das Aufschlagmittel überwiegend aus diesen einzeln oder in Kombination besteht.

3. Trockenmischung nach einem der Ansprüche 1 oder 2, **dadurch gekennzeichnet, dass** das Verdickungsmittel in einem Anteil von 0,1 bis 25 Gew.-% enthalten ist.

4. Trockenmischung nach einem der Ansprüche 1-3, **dadurch gekennzeichnet, dass** das Verdickungsmittel eines oder mehrere Mittel enthält ausgewählt aus der Gruppe modifizierte Stärken, Carragen, Gelatine, Guarkernmehl, Johanisbrotkernmehl, Cellulosen und deren Derivate, Hemicellulosen, Pektine.

5. Trockenmischung nach einem der Ansprüche 1-4, **dadurch gekennzeichnet, dass** das Gewichtsverhältnis von Verdickungsmittel zu Aufschlagmittel im Bereich von 10:1 bis 1:10 liegt.

6. Trockenmischung nach Anspruch 5, **dadurch gekennzeichnet, dass** das Gewichtsverhältnis von Aufschlagmittel zu Verdickungsmittel ≤ 3:1 ist.

7. Trockenmischung nach einem der Ansprüche 1-6, **dadurch gekennzeichnet, dass** das Gewichtsverhältnis von Zucker und/oder Zuckeraustauschstoff zu Aufschlagmittel im Bereich von 100:1 bis 1:1 liegt.

8. Trockenmischung nach einem der Ansprüche 1-7, **dadurch gekennzeichnet, dass** das Gewichtsverhältnis von Zucker und/oder Zuckeraustauschstoff zu Verdickungsmittel im Bereich von 150:1 bis 1:1 liegt.

9. Trockenmischung nach einem der Ansprüche 1-8, **dadurch gekennzeichnet, dass** Säuerungsmittel in Form von Genusssäuren in einem Gehalt von 0,1 bis 20 Gew.-% enthalten sind und/oder dass ≤50 Gew.-% an Stoffen zur Geschmacksveränderung enthalten sind.

10. Trockenmischung nach einem der Ansprüche 1-9, **dadurch gekennzeichnet, dass** diese einen Gehalt von ≤ 20 Gew.-% an tierischen Bestandteilen aufweist.

11. Konzentrat einer Trockenmischung nach einem der Ansprüche 1-10, **dadurch gekennzeichnet, dass** das Konzentrat gegenüber der Trockenmischung einen reduzierten Gehalt an zumindest einem Zucker enthält, nämlich einen Gehalt an Saccharose von ≤ 50 Gew.-%, oder frei von Zucker und/oder Zuckeraustauschstoffen ist, dass das Aufschlagmittel in einem Anteil von 0,5-7.5 Gew.-% in dem Konzentrat enthalten ist und dass der Fettgehalt des Konzentrats ≤ 10 Gew.-% beträgt.

12. Konzentrat nach Anspruch 11, **dadurch gekennzeichnet, dass** das Verdickungsmittel in einem Anteil von 0,2-70 Gew.-% in dem Konzentrat enthalten ist.

13. Verfahren zur Herstellung einer Speiseeiszubereitung aus einer Trockenmischung nach einem der Ansprüche 1-10 oder einem Konzentrat nach Anspruch 11 oder 12, wobei die speiseeiszubereitung hergestellt wird durch
- Homogenisieren eines Gemisches von Früchten, einer Fruchtzubereitung und/oder einem Milchprodukt einerseits und der Trockenmischung nach einem der Ansprüche 1-10, oder dem mit mindestens einem Zucker oderZuckeraustauschstoff angereicherten Konzentrat nach Anspruch 11 oder 12 andererseits, gegebenenfalls unter weiterer Zugabe von Flüssigkeit
- Aufschlagen der homogenisierten Zubereitung, gegebenenfalls gleichzeitig mit oder unmittelbar nachfolgend mit der Homogenisierung, und
- Gefrieren der aufgeschlagenen Mischung unter Herstellung von Speiseeis.

14. Verfahren nach Anspruch 13, **dadurch gekennzeichnet, dass** die homogenisierte Zubereitung unter Verwendung eines Küchengerätes hergestellt wird.

15. Verfahren nach Anspruch 13 oder 14, **dadurch gekennzeichnet, dass** das Homogenisieren und Aufschlagen der Zubereitung gleichzeitig erfolgt und/oder dass die aufgeschlagene Mischung zur Herstellung von Speiseeis unmittelbar nach dem Aufschlagen einem Gefriervorgang unterworfen wird.

16. Verfahren nach einem der Ansprüche 13-15, **dadurch gekennzeichnet, dass** das Gewichtsverhältnis von Früchten, Fruchtzubereitung und/oder Milchprodukten zu der Trockenmischung zu 8:1 bis 1:3 beträgt.

17. Verfahren nach einem der Ansprüche 13-16, **dadurch gekennzeichnet, dass** Fruchtsaft in einer Menge zugegeben wird, welche ≤ 80 Gew.-% des Gesamtgehaltes an Frucht und Fruchtzubereitung ausmacht.

18. Verfahren nach einem der Ansprüche 13-17, **dadurch gekennzeichnet, dass** der Fettgehalt der Speiseeiszubereitung ≤ 10 Gew.-% bezogen auf die verzehrfertige Zubereitung beträgt.

19. Verfahren nach einem der Ansprüche 13-18, **dadurch gekennzeichnet, dass**, sofern in der Trockenmischung nicht enthalten, ≤ 50 Gew.-% an Stoffen zur Geschmacksveränderung bezogen auf das Gewicht der Trockenmischung zugefügt werden.

## Claims

1. Dry mix for the production of ice cream that yields the ice cream following homogenisation with fruits, fruit preparations and/or a milk product and freezing, **characterised in that** the dry mix contains:
(1) at least one type of sugar and/or a sugar substitute,
(2) at least one whipping agent containing at least one or more agents selected from the group comprising hydrolysed or non-hydrolysed vegetable proteins, hydrolysed or non-hydrolysed animal proteins, hydrolysed or non-hydrolysed milk proteins, hydrolysed or non-hydrolysed whey proteins, gelatine, hydrolysed or non-hydrolysed dried protein, whipping emulsifiers, cellulose derivatives, lecithin, modified starch, quillaia,
where the whipping agent is contained in the dry mix in a proportion of 0.1 to 25% by weight,
(3) at least one thickener, where appropriate, and/or
(4) at least one acidifier, where appropriate, including a food acid,
where the fat content of the dry mix is ≤ 10% by weight.

2. Dry mix according to Claim 1, **characterised in that** hydrolysed vegetable proteins and/or hydrolysed animal proteins are contained as the whipping agent, or **in that** the whipping agent predominantly consists of these, individually or in combination.

3. Dry mix according to Claim 1 or 2, **characterised in that** the thickener is contained in a proportion of 0.1 to 25% by weight.

4. Dry mix according to one of Claims 1 to 3, **characterised in that** the thickener contains one or more agents selected from the group comprising modified starches, carrageen, gelatine, guar gum, locust bean gum, celluloses and their derivatives, hemicelluloses, pectins.

5. Dry mix according to one of Claims 1 to 4, **characterised in that** the weight ratio of thickener to whipping agent is in the range between 10:1 and 1:10.

6. Dry mix according to Claim 5, **characterised in that** the weight ratio of whipping agent to thickener is ≤ 3:1.

7. Dry mix according to one of Claims 1 to 6, **characterised in that** the weight ratio of sugar and/or sugar substitute to whipping agent is in the range between 100:1 and 1:1.

8. Dry mix according to one of Claims 1 to 7, **characterised in that** the weight ratio of sugar and/or sugar substitute to thickener is in the range between 150:1 and 1:1.

9. Dry mix according to one of Claims 1 to 8, **characterised in that** acidifiers in the form of food acids are contained in a proportion of 0.1 to 20% by weight and/or **in that** < 50% by weight substances for flavour modification are contained.

10. Dry mix according to one of Claims 1 to 9, **characterised in that** it displays a content of ≤ 20% by weight animal ingredients.

11. Concentrate of a dry mix according to one of Claims 1 to 10, **characterised in that**, compared to the dry mix, the concentrate has a reduced content of at least one sugar, namely a content of ≤ 50% by weight sucrose, or is free of sugar and/or sugar substitutes, **in that** the whipping agent is contained in the concentrate in a proportion of 0.5 to 75% by weight, and **in that** the fat content of the concentrate is ≤ 10% by weight.

12. Concentrate according to Claim 11, **characterised in that** the thickener is contained in the concentrate in a proportion of 0.2 to 70% by weight.

13. Method for producing an ice cream preparation from a dry mix according to one of Claims 1 to 10, or from a concentrate according to Claim 11 or 12, where the ice cream preparation is produced by
- Homogenisation of a mixture of fruits, a fruit preparation and/or a milk product, on the one hand, with the dry mix according to one of Claims 1 to 10, or the concentrate enriched with at least one sugar or sugar substitute according to Claim 11 or 12, on the other hand, further liquid being added where appropriate,
- Whipping of the homogenised preparation, at the same time as or immediately following homogenisation, where appropriate, and
- Freezing of the whipped mixture, thereby producing ice cream.

14. Method according to Claim 13, **characterised in that** the homogenised preparation is produced using a kitchen appliance.

15. Method according to Claim 13 or 14, **characterised in that** homogenisation and whipping of the preparation are performed simultaneously and/or **in that** the whipped mixture is subjected to a freezing process immediately after whipping in order to produce ice cream.

16. Method according to one of Claims 13 to 15, **characterised in that** the weight ratio of fruits, fruit preparation and/or milk products to dry mix is between 8:1 and 1:3.

17. Method according to one of Claims 13 to 16, **characterised in that** fruit juice is added in a quantity accounting for ≤ 80% by weight of the total content of fruit and fruit preparation.

18. Method according to one of Claims 13 to 17, **characterised in that** the fat content of the ice cream preparation is ≤ 10% by weight, referred to the ready-to-eat preparation.

19. Method according to one of Claims 13 to 18, **characterised in that**, if not contained in the dry mix, ≤ 50% by weight substances for flavour modification are added, referred to the weight of the dry mix.

## Revendications

1. Mélange sec pour la production de crème glacée qui est homogénéisé avec des fruits, des préparations de fruits et/ou un produit laitier et qui, par congélation, donne la crème glacée, **caractérisé en ce que** le mélange sec comprend :
(1) au moins une sorte de sucre et/ou un substitut de sucre,
(2) au moins un agent moussant qui comprend au moins un ou plusieurs agents choisis dans le groupe comprenant des protéines végétales hydrolysées ou non hydrolysées, des protéines animales hydrolysées ou non hydrolysées, des protéines du lait hydrolysées ou non hydrolysées, des protéines de lactosérum hydrolysées ou non hydrolysées, de la gélatine, de l'albumine sèche hydrolysée ou non hydrolysée, des émulsifiants moussants, des dérivés de cellulose, de la lécithine, des amidons modifiés, du quaillja,
dans lequel l'agent moussant est contenu en une proportion de 0,1 à 25 % en poids dans le mélange sec,
(3) éventuellement au moins un agent épaississant et/ou
(4) éventuellement au moins un acidifiant comprenant un agent de sapidité,
dans lequel la teneur en matières grasses du mélange sec est ≤ 10 % en poids.

2. Mélange sec selon la revendication 1, **caractérisé en ce que** sont contenus comme agents moussants, des protéines végétales hydrolysées et/ou des protéines animales hydrolysées ou **en ce que** l'agent moussant est constitué principalement de ces agents individuels ou combinés.

3. Mélange sec selon l'une des revendications 1 ou 2, **caractérisé en ce que** l'agent épaississant est contenu en une proportion de 0,1 à 25 % en poids.

4. Mélange sec selon l'une des revendications 1 à 3, **caractérisé en ce que** l'agent épaississant contient un ou plusieurs agents choisis dans le groupe comprenant des amidons modifiés, du carragheen, de la gélatine, de la gomme guar, de la farine de caroube, des celluloses et leurs dérivés, des hémicelluloses, des pectines.

5. Mélange sec selon l'une des revendications 1 à 4, **caractérisé en ce que** le rapport en poids de l'agent épaississant à l'agent moussant se situe dans une plage de 10:1 à 1:10.

6. Mélange sec selon la revendication 5, **caractérisé en ce que** le rapport en poids de l'agent moussant à l'agent épaississant est ≤ 3:1.

7. Mélange sec selon l'une des revendications 1 à 6, **caractérisé en ce que** le rapport en poids du sucre et/ou substitut de sucre à l'agent moussant se situe dans une plage de 100:1 à 1:1.

8. Mélange sec selon l'une des revendications 1 à 7, **caractérisé en ce que** le rapport en poids du sucre et/ou du substitut de sucre à l'agent épaississant se situe dans une plage de 150:1 à 1:1.

9. Mélange sec selon l'une des revendications 1 à 8, **caractérisé en ce que** les agents acidifiants sous la forme d'agents de sapidité sont contenus en une teneur de 0,1 à 20 % en poids et/ou ≤ 50 % en poids de substance pour modifier le goût.

10. Mélange sec selon l'une des revendications 1 à 9, **caractérisé en ce que** celui-ci présente une teneur ≤ 20 % en poids de composants animaux.

11. Concentré d'un mélange sec selon l'une des revendications 1 à 10, **caractérisé en ce que** le concentré contient par rapport au mélange sec, une teneur réduite en au moins un sucre à savoir une teneur en saccharose de ≤ 50 % en poids ou n'a pas de sucre et/ou substitut de sucre, **en ce que** l'agent moussant est contenu en une proportion de 0,5 à 75 % en poids dans le concentré et **en ce que** la teneur en graisses du concentré est ≤ 10 % en poids.

12. Concentré selon la revendication 11, **caractérisé en ce que** l'agent épaississant est contenu en une proportion de 0,2 à 70 % en poids dans le concentré.

13. Procédé de production d'une préparation de crème glacée à partir d'un mélange sec selon l'une des revendications 1 à 10 ou d'un concentré selon la revendication 11 ou 12, la préparation de crème glacée étant produite par
- homogénéisation d'un mélange de fruits, d'une préparation de fruits et/ou d'un produit laitier d'une part et du mélange sec selon l'une des revendications 1 à 10 ou d'un concentré enrichi avec au moins un sucre ou un substitut de sucre selon la revendication 11 ou 12 d'autre part, éventuellement en ajoutant encore un liquide,
- moussage de la préparation homogénéisée, éventuellement en même temps ou immédiatement après l'homogénéisation, et
- congélation du mélange battu produisant une crème glacée.

14. Procédé selon la revendication 13, **caractérisé en ce que** la préparation homogénéisée est produite en utilisant un appareil de cuisine.

15. Procédé selon la revendication 13 ou 14, **caractérisé en ce que** l'homogénéisation et le moussage de la préparation s'effectuent en même temps et/ou **en ce que** le mélange battu est soumis à un processus de congélation pour la production de la crème glacée immédiatement après le moussage.

16. Procédé selon l'une des revendications 13 à 15, **caractérisé en ce que** le rapport en poids des fruits, de la préparation de fruits et/ou des produits laitiers au mélange sec est de 8:1 à 1:3.

17. Procédé selon l'une des revendications 13 à 16, **caractérisé en ce que** du jus de fruit est ajouté en une quantité qui constitue ≤ 80 % en poids de la teneur totale en fruit et en préparation de fruits.

18. Procédé selon l'une des revendications 13 à 17, **caractérisé en ce que** la teneur en graisses de la préparation de crème glacée est ≤ 10 % en poids par rapport à la préparation prête à être consommée.

19. Procédé selon l'une des revendications 13 à 18, **caractérisé en ce que**, si elles ne sont pas contenues dans le mélange sec, on ajoute ≤ 50 % en poids de substances destinées à modifier le goût, par rapport au poids du mélange sec.
